Europäisches Patentamt

(19) European Patent Office

Office européen des brevets

(11) Publication number: **0 314 503**
**A2**

# (12) EUROPEAN PATENT APPLICATION

(21) Application number: 88310178.4

(22) Date of filing: 28.10.88

(51) Int. Cl.⁴: **G 06 F 15/20**
**G 06 F 15/38**

(30) Priority: 28.10.87 JP 274158/87

(43) Date of publication of application:
03.05.89 Bulletin 89/18

(84) Designated Contracting States: DE GB

(71) Applicant: **SHARP KABUSHIKI KAISHA**
**22-22 Nagaike-cho Abeno-ku**
**Osaka 545 (JP)**

(72) Inventor: **Kuga, Shigeki**
**2-15-15, Nishichiyogaoka**
**Nara-shi Nara-ken (JP)**

**Wada, Masahiro**
**1-10-31, Shijo-ooji**
**Nara-shi Nara-ken (JP)**

**Morishita, Taro**
**4-13-1, Nagamodai Kamo-cho Souraku-gun**
**Kyoto (JP)**

**Kanza, Hiroyuki**
**1-2-3-204, Kabutodai Kizu-cho Souraku-gun**
**Kyoto (JP)**

(74) Representative: **Hitchcock, Esmond Antony et al**
**Lloyd Wise, Tregear & Co. Norman House 105-109 Strand**
**London WC2R 0AE (GB)**

(54) Dictionary structure for document processing apparatus.

(57) A dictionary for a document processing apparatus, which is used for analysis of language and stored in document processing apparatus for processing the Japanese language, for example, has a structure comprising lexical entries obtained by sorting "kana" in a predetermined order, lexical entries obtained by sorting "kanji" in a predetermined order, and key data for correlating the lexical entries of "kana" with the lexical entries of "kanji" to each other in a one to one corresponding relation.

EP 0 314 503 A2

## Description

# DICTIONARY STRUCTURE FOR DOCUMENT PROCESSING APPARATUS

Field of the Invention

The present invention relates to a dictionary structure for a document processing apparatus, the dictionary structure being used in a variety of document processing apparatus which require analysis of a character string, such as document composing and correction supporting apparatus, summarizing apparatus, retrieving apparatus, mechanical translating apparatus, and word processors.

Description of the Prior Art

Recently, many types of word processors for processing various languages have been put into practice. With regards to word processors for processing the Japanese language, for example, the associated basic techniques have been established which include input/output of the Japanese language, editing, kana (Japanese alphabet) /kanji (Chinese character used in Japanese writing) conversion algorithms, dictionaries, etc.

In the following description, the processed language is assumed to be Japanese, unless otherwise specified.

Kana/kanji conversion algorithms for the Japanese language generally utilize both linguistic information, such as a word dictionary and grammar, and probability information, such as frequency of use of a word, during the process of converting kana to kanji. Accordingly, the dictionary, rules and other components to be of practical use must be fairly large in scale, and hence the means for storing such a dictionary, rules and others components require a large storage capacity (see Japanese Published Unexamined Patent Application Nos. 57-185573(1982) and 57-185575(1982), for example).

On the other hand, the Japanese language processing techniques employed in document correcting apparatus, mechanical translating apparatus and the like are often required to analyze a kanji/kana mixed sentence, which by analysis is opposite to the kana/kanji conversion processing sequence. Basic techniques such as a dictionary and a algorithms necessary for such analysis have also been established.

The method of analyzing the language includes, for example, a morpheme analysis for dividing one sentence into individual words and analyzing its parts of speech, a syntax analysis for analyzing whether or not the linkage between one part of speech and the other part of speech is correct in terms of its grammar, and a meaning analysis for analyzing whether or not the meaning is understood in the proper way, even if the linkage between parts of speech is correct grammatically. Basic techniques relating to those analyses are already known in the art.

Meanwhile, at present, document processing apparatus in a broad sense is usually designed to include an input means, such as means for kana/kanji conversion in the case of apparatus for processing a document to be written the Japanese language, for example, and also have the capability of executing specific processing operations such as translation and correction.

In this type of document processing apparatus, a kanji/kana mixed sentence is often analyzed. For such analysis, a dictionary, rules and others are required, and hence the means by which they are stored will require a large capacity for storing them (see Japanese Published Unexamined Patent Application No. 62-209662(1987), for example).

Because the foregoing kana/kanji conversion and analysis of a kanji/kana mixed sentence have different objects to be analyzed, it has been customary to prepare two sets of dictionaries, rules and others separately. Therefore, a problem has arisen in that a document processing apparatus capable of handling both kana/kanji conversion and analysis of a kanji/kana mixed sentence requires even more storage capacity.

To solve the above problem, it is conceivable to commonly use one set of a dictionary, rules and others for kana/kanji conversion and analysis of kanji/kana mixed sentence. Although common use in this manner is theoretically feasible, this suffers from a problem that the processing time necessary for either conversion or analysis is prolonged and the apparatus is rendered unsuitable for practical use.

Futher, the document processing apparatus often requires maintenance of a dictionary, rules and others dependent on the demands of the users or varying trend of the times. In this case, it is required to update two sets of dictionaries, rules and other for kana/kanji conversion and analysis of kanji/kana mixed sentence, thereby prolonging the operation time required for maintenance and increasing the probability of errors.

It is an object of the present invention to solve the problems as mentioned above.

The present invention provides a dictionary structure for a document processing apparatus comprising means for inputting and editing language, means for storing the input language, means for storing a dictionary used to analyze the language, means for storing the grammar of the language and analyzing the input language based on the stored grammar while referring to the dictionary, means for extracting a portion to be corrected out of the input language, means for displaying the language, and means for modifying a portion of the language which is to be corrected, if exists,

the dictionary for analyzing the language providing;

 i) lexical entries obtained by sorting a first group of representations of the language in a predetermined order,

 ii) lexical entries obtained by sorting a second group of representations of the language in a predetermined order, and

 iii) key data for correlating the lexical entries of the first group of representations with the lexical entries of the second group of representations to each other in a one to one corresponding relation.

With the dictionary structure for the document processing apparatus of the present invention thus configured, a single dictionary is structured such that the lexical entries obtained by sorting a first group of representations in a predetermined order to be suitable for retrieval from the first group of representations and the lexical entries obtained by sorting a second group of representations in a predetermined order to be suitable for retrieval from the second group of representations are correlated with each other in a one to one corresponding relation via key data, thereby allowing the first group of representations and the second group of representations to be mutually retrievable from the former to the latter or vice versa.

Therefore, it becomes possible to share common information and reduce the storage capacity necessary for storing the dictionary.

Embodiments of the invention will now be described by way of example and with reference to the accompanying drawings wherein:

Fig. 1 is a block diagram showing the configuration of a document processing apparatus according to the present invention;

Fig. 2 is a entire configuration view of a dictionary of the present invention;

Fig. 3 is a view showing a dictionary structure of the present invention;

Figs. 4 and 5 are views showing different dictionary structures according to other embodiments of the present invention;

Figs. 6a and 6b a flow chart showing an outline of the language processing executed by the use of a dictionary having the dictionary structure of the present invention;

Fig. 7 is a view showing an example of a conventional dictionary structure for kana/kanji conversion;

Fig. 8 is a view showing a conventional dictionary structure for kana/kanji conversion;

Fig. 9 is a view showing an example of an index structure for the dictionary of Fig. 7; and

Fig. 10 is a view of an extracted portion of Fig. 8.

A term "first group of representations" used in the present invention means one type of representational, morph in any one language, e.g., representations expressed by phonetic symbols such as hiragana (the cursive kana characters), katakana (square form of kana) and romaji (Japanese in Roman characters) in the Japanese language, or the Hangul alphabets in the Korean language. Also, a term "second group of representations" used in the present invention means the other type of representational morph different from that of the first group of representations of the language but which can be expressed by the first group of representations, e.g., representations expressed by ideographic characters such as kanji in the Japanese or Korean language.

The present invention will be described below in detail with reference to an embodiment shown in the drawings. In the following description of this embodiment, the language is assumed to be Japanese.

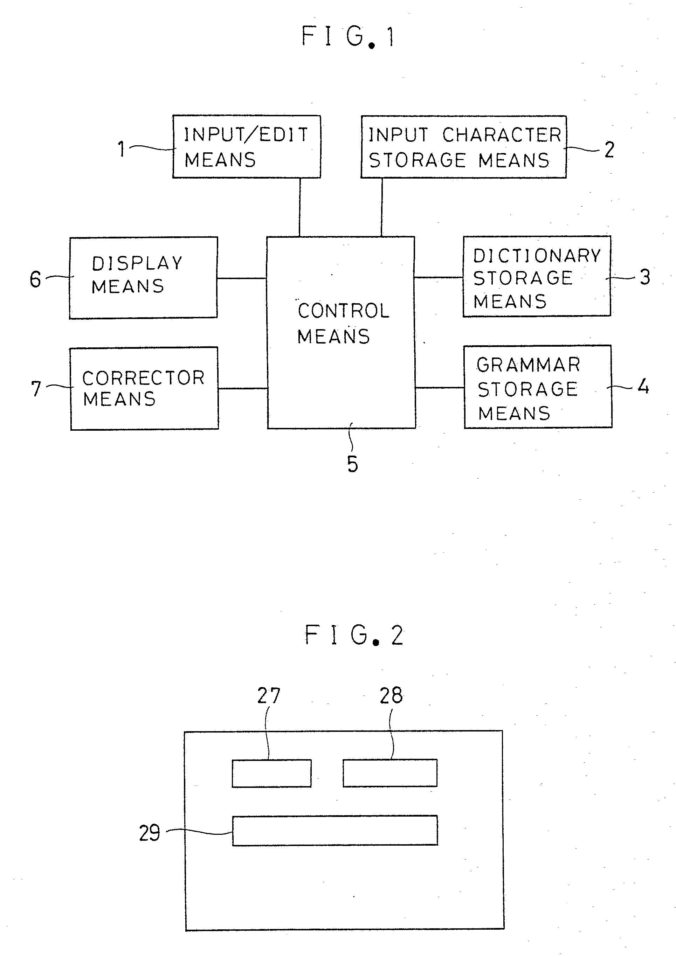

Fig. 1 is a block diagram showing the configuration of a document processing apparatus according to the present invention.

In Fig. 1, designated at reference numeral 1 is an input/edit means such as a keyboard for inputting and editing a character string of the Japanese language. The input/edit means 1 includes a kana/kanji converting function for converting kana to kanji and a function of specifying any one character string, which are already well-known functions in the art.

Designated at 2 is an input character storage means for storing the character string of the Japanese language which is input from the input/edit means 1. The input/edit means 1 usually given by a keyboard through which character strings are input sequentially. But, it may be an externally configured storage means, such as a floppy disk or magnetic tape, on which a mass of character strings of the Japanese language have been stored in advance.

Designated at 3 is a dictionary storage means for storing a dictionary used to analyze the character/symbol string loaded in the input character storage means 2.

Designated at 4 is grammar storage means for storing grammar, rules and others necessary for analyzing a sentence.

Designated at 5 is control means for extracting a portion of the character string loaded in the input character storage means 2, for storing the intermediate result in the course of processing, and for executing a command to display. The control means 5 includes means for storing the result of the control.

Designated at 6 is display for displaying the input character string, the intermediate result of collation, the character string to be corrected, KWIC (Key Word in Context), etc.

Designated at 7 is an editor for reflecting the result of modifying the displayed portion for correction into the original sentence. Where the document processing apparatus is not mainly used or correction, the function, of the editor means 7 can instead by executed by the input/edit means 1.

The dictionary structure which is a main subject of the present invention will now be described. For a clear understanding of the difference in a dictionary structure between the prior art and the present invention, and conventional dictionary structure will first be explained, followed by an explanation of the dictionary structure of the present invention. It is also to be noted that although there are a variety of dictionaries, a word dictionary which plays a central role in language analysis will be described here.

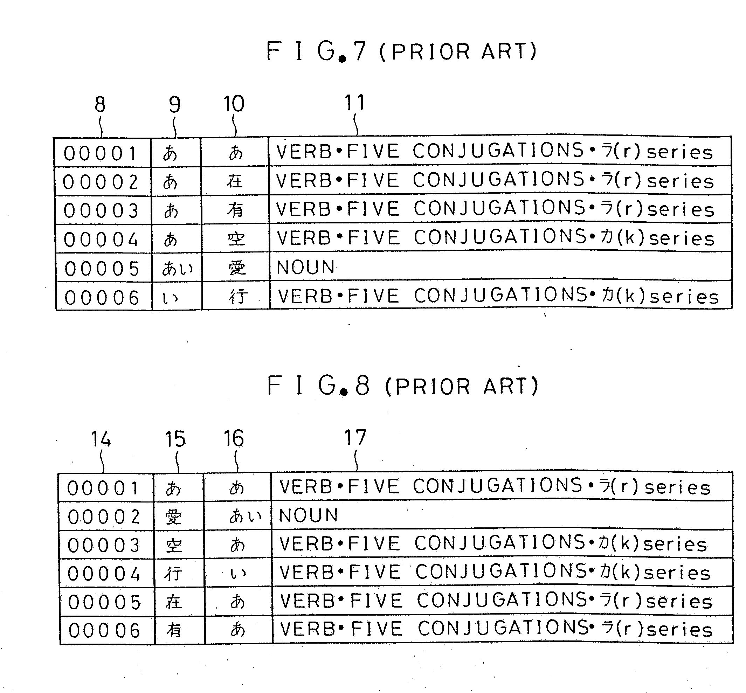

Fig. 7 is a view showing the conventional structure of a word dictionary for kana/kanji conversion.

In Fig. 7, designated at 8 is a column of the ID numbers for vocabulary entries of the dictionary. The ID numbers may be omitted because they can be derived from addresses of a memory in which the dictionary is loaded.

Designated at 9 is a column of kana representations of the vocabulary entries, which show readings in kana. In currently employed techniques, if the vocabulary entries have conjugations, only the stems of the words are usually registered. So, this explanation follows such a usual method.

Before entering the detailed description, it is here assumed to take only six vocabulary entries as examples; "あ る(aru)", "在 る(aru)", "有 る(aru)", "空 く(aku)", "愛 (ai)", and "行 く(iku)". Among these six vocabulary entries, "あ る (aru)", "在 る(aru)", "有 る(aru)", "空 く(aku)", and "行 く(iku)" have conjugations, and hence only "あ (a)" or "い (i)" is registered as the item of a word in the respective areas of the column of kana registrations 9.

Designated at 10 is a column of kanji representations for the vocabulary entries in which character strings and the kanji representations corresponding to the kana representations are registered.

Designated at 11 is a column of parts of speech information for the vocabulary entries. In addition to the parts of speech information, this column may further include morph information for morpheme analysis, syntax informa tion for syntax analysis and meaning information for meaning analysis. Since the use of these types of information are not related to the essentials of the present invention, only the part of speech information will be dealt with in the following for simplicity of description. Incidentally, "VERB•FIVE CONJUGATIONS• ラ (r)-SERIES" in Fig. 7 indicates that the relevant vocabulary entry is a verb having five conjugations in r-series.

The technique of kana/kanji conversion is no more than the processing which compares the input kana character string with the kana representations 9 using the above-mentioned dictionary, and then outputs the relevant kanji character representation 10 when proper analysis has been carried out subject to certain other conditions such as grammar.

Note that the gist of the present invention will not be affected by the modified arrangement of the respective elements from the ID numbers 8 to the part of speech information 11 other than the one which is illustrated.

To speed up collation of the input kana character string with the dictionary, two ingenious expedients are usually adopted. The first one is to sort the kana representations 9 in the dictionary according to a prescribed reference. Fig. 7 shows a case in which the kana representations 9 are sorted in ascending order of the Japanese kana syllabary, i.e., "あ い う え お . . .".

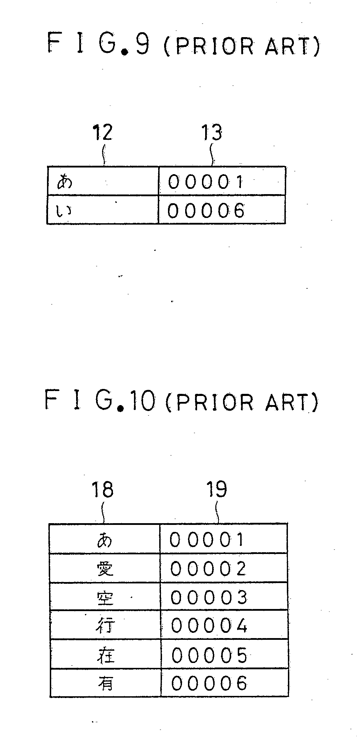

The second ingenious expedient is to prepare a dictionary index effective in quickly determining a range of retrieval. Fig. 9 is a view showing an example of a one-character index corresponding to the dictionary of Fig. 2.

Reference numeral 12 designates one-characters as keys for retrieval, each of which indicates a sort of the first character in the Japanese reading in kana, and 13 designates the values of each indicating the location where a particular group of vocabulary entries beginning with that key one-character are stored. For simplicity of description, Fig. 9 shows an example in which the vocabulary entry with the ID number "00001" in the dictionary is stored in the address of "00001".

From the dictionary of Fig. 7 and the index of Fig. 9, it will be found, for example, that the character string of "あ い (ai)" only requires that it be retrieved for an area from the ID number "00001" to "00005" in the dictionary. Searching and retrieval from the remaining areas is therefore not necessary, and the collation processing time is shortened.

Fig. 8 is a view showing a dictionary structure for analysis of a kanji/kana mixed sentence. In Fig. 8, reference numeral 14 designates information indicative of the ID numbers of the respective vocabulary entries, 15 kanji representations for the vocabulary entries, 16 kana representations for the vocabulary entries, and 17 part of speech information for the vocabulary entries. As with the dictionary for kana/kanji conversion, only stems of words are registered for those vocabulary entries which have conjugations, and the part of speech information may include other information dependent of specific cases. To speed up collation of the input kana character string with the dictionary, kanji representations 15 to be retrieved are stored based on a prescribed reference in this dictionary as well. Fig. 8 illustrates an example in which the kanji representations are stored in the ascending order of kanji code JIS C6226. Incidentally, for the purpose of analyzing the input kanji/kana mixed sentence, the ID numbers 14 and/or the kana representations 16 may be omitted.

Although any index has no meaning for the contents of the illustrated dictionary, it is customary to prepare an index of the dictionary for analysis of a kanji/kana mixed sentence for it to be collated in practical use. Fig. 10 shows a structure of the index.

In Fig. 10, reference numeral 18 designates key indices comprising one character, and 19 designates start addresses from each of which the vocabulary entry having the corresponding key character string at its head begins.

In the past, the dictionary for kana/kanji conversion of Fig. 7, the index of Fig. 9, the dictionary for analysis of a kanji/kana mixed sentence of Fig. 8, and the index of Fig. 10 have been stored as structures independent of each other in the dictionary storage means 3. The reason becomes apparent when we consider the case of attempting to analyze a kanji/kana mixed sentence using the dictionary for kana/kanji conversion. Taking as an example the case of collating a sentence of "愛 の 有 る 生 活 (ai no aru seikatsu)" with the dictionary of Fig. 7, the character "愛 (ai)" is first separately taken out and compared with the kanji representations 10 of the vocabulary entries in Fig. 7. At this time, because the kanji representations 10 in Fig. 7 are not sorted using the prescribed kanji code, e.g., JIS C6226, as a key "愛 (ai)" has to be sequentially collated with the kanji representations 10 from the address 1.

As a result, assuming that the total number of vocabulary entries in the dictionary is N and the time required for collating the selected character, e.g., "愛 (ai)" in this case, with the kanji representation of each vocabulary entry is t, the mean time TM of retrieval is given by the following equation:

$$TM = N \times t / 2$$

Thus, in the modern practical system having N over 10,000 and requiring t of several μ s, such a retrieval method is not suitable for practical use.

The above impractical situation also occurs when we consider the case of carrying out kana/kanji conversion by the use of the dictionary for analysis of a kanji/kana mixed sentence and its index.

The foregoing is the reason why the dictionary for kana/kanji conversion and the dictionary for analysis of a kanji/kana mixed sentence have hitherto been stored independently of each other.

However, the two dictionaries of Figs. 7 and 8 contain the same information therein with only the difference in whether the vocabulary entries are stored in the kana representations or the kanji representations. The present invention has been accomplished by paying attention to this point.

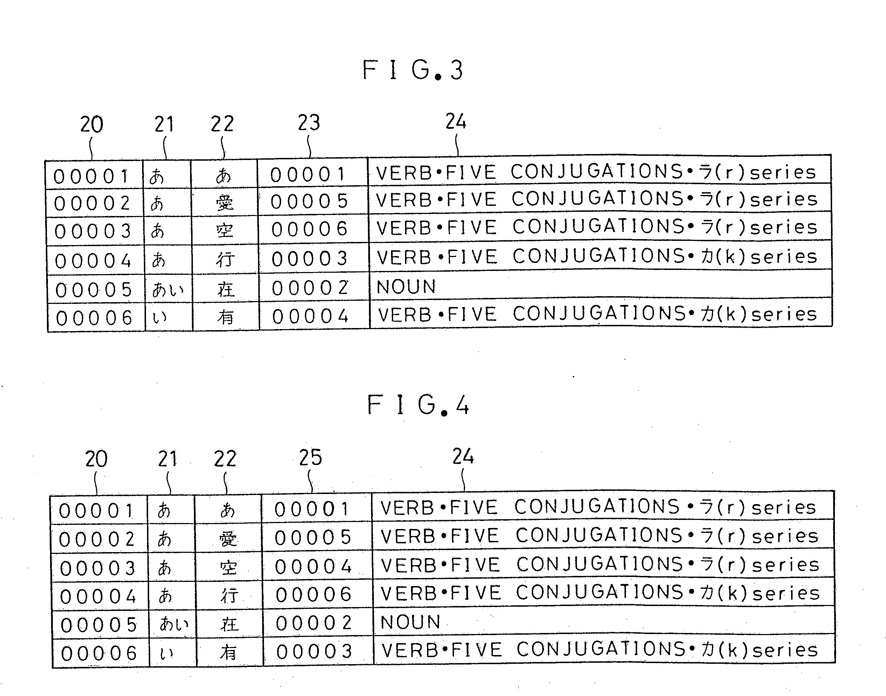

Fig. 3 is a view showing an example of a dictionary structure which is used in the present invention. The same vocabulary entries as those in Figs. 7 and 8 will be treated in the following description.

In Fig. 3, reference numeral 20 designates the ID numbers of the vocabulary entries, 21 kana representations of the vocabulary entries, and 22 kanji representations of the vocabulary entries. The arrangement of the kana representations 21 and the kanji representations 22 is featured in combination of the dictionary for kanji/kana conversion and the dictionary for analysis of a kana/kanji mixed sentence which have hitherto been independent of each other. In other words, the kana representations 21 are sorted in such a way that they are fit for the kana/kanji conversion and the kanji representations 22 are sorted in such a way that they are fit for the analysis of a kanji/kana mixed sentence.

Reference numeral 23 designates correlating information necessary to correlate the kana representations 21 and the kanji representations 22. This information indicates that the kanji representations 22 corresponding to the ID numbers 20 contained in this information are the specific kanji representations for the kana representations 21. For example, since the vocabulary entry of the ID number 00003 has the correlating information of 00006, the kanji representation "有" is obtained by retrieving one of the kanji representations associated with the ID number 00006 of the particular vocabulary entry.

Reference number 24 designates part of speech information for the vocabulary entries. The part of speech information 24 in the illustrated case is set in conformity with the kana representations 21, but may be set in conformity with the kanji representations 22. The present invention will not be affected by any structural arrangement of the ID numbers 20 to the part of speech information 24 as with the dictionary structures of Figs. 7 and 8.

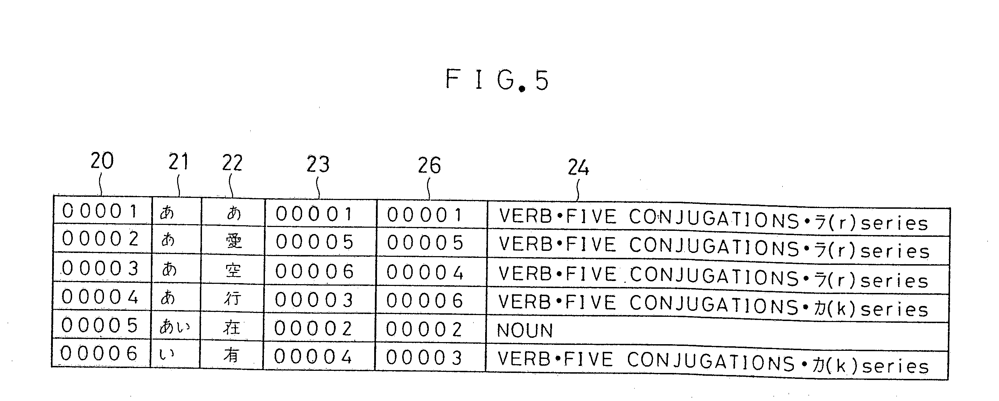

Fig. 4 is a view showing another embodiment of the dictionary structure according to the present invention. In the dictionary structure of Fig. 4, the contents of the correlating information 23 in Fig. 3 is replaced by those of correlating information 25. More specifically, while the correlating information 23 in Fig. 3 is used for retrieving the kanji representations 22 from the kana representations 21 as keys, the correlating information 25 in Fig. 4 is used for retrieving the kana representations 21 from the kanji representations 22 as keys. For easy comparison, the same reference numerals as those employed in Fig. 3 are used in Fig. 4.

Fig. 5 is a view showing another embodiment of the dictionary structure according to the present invention. The dictionary structure of Fig. 5 has the combined form of Figs. 3 and 4 in which the correlating information 25 in Fig. 4 is added to the dictionary structure of Fig. 3 as an additional method of correlating information 26.

Fig. 2 is a conceptual view showing an entire configuration of the dictionary of the present invention. In Fig. 2, designated at 27 is a conceptual indication of a structure for storing information of the vocabulary entries read in kana which have been sorted based on the reading of the vocabulary entries in kana in such a way that they are fit for retrieval from the kana representations. 28 is a conceptual indication of a structure for storing information of the vocabulary entries in kanji representations which have been sorted based on the kanji representations in such a way that they are fit for retrieval from a kanji/kana mixed character string. 29 is a conceptual indication of a structure for storing information for interlinking the structures 27 and 28, information about parts of speech common to both the structures, and respective information specific to the structures 27 and 28.

Next, a retrieval method of analyzing a kanji/kana mixed sentence using the dictionary structure of Fig. 3 mainly aimed at kana/kanji conversion will be described. In the dictionary structure of Fig. 3, the part of speech information corresponds to the kana representations 21. If we consider the case of analyzing a sentence of "愛 の 有 る 生 活 (ai no aru seikatsu)" again here, "愛 (ai)" is first collated in a like manner to the above. By employing the index of Fig. 10, the vocabulary entry "愛 (ai)" can be retrieved at once using the index of Fig. 10. At this time, the ID number 00002 of the vocabulary entry is stored in a stack. But, collation for the linguistic conformity conditions and others cannot be made because of speech information 24 corresponding to the ID number 00002 is different from that for "愛 (ai)". It is, therefore, necessary to retrieve the correct part of speech information of "愛 (ai)" as follows. First, by retrieving the correlating information 23 for the kanji representations 22 of the vocabulary entries, the number 00005 can be obtained. Then, the ID number of 00005 is retrieved. As a result of checking the correlating information 23 corresponding to the ID number of 00005, the number 00002 is obtained. The interlinked retrieval of the correlating information 23 is stopped at the time when the number previously stored in the stack at the beginning of retrieval of "愛 (ai)" coincides with the number obtained from the retrieved correlating information 23. In this example, at the time when the ID number 00005 is retrieved, interlinked retrieval of the correlating information 23 is stopped and the part of speech information 24 corresponding to that number is retrieved. The part of speech information 24 thus retrieved is that for "愛 (ai)". The remaining

part of speech information 24,corresponding to other kanji representations can be retrieved in a similar sequence.

In the dictionary structure of Fig. 5, the part of speech information 24 can be retrieved more easily. Thus, in this case, it is required that one retrieve only the part of speech information 24 for the same ID number as the number given by correlating information 26.

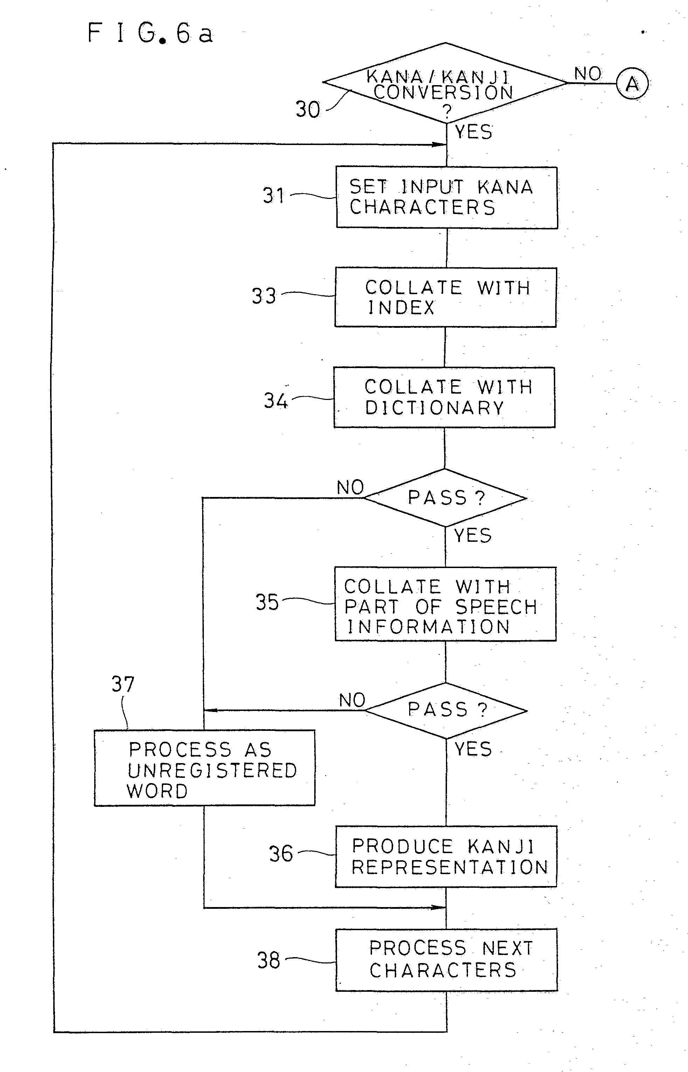

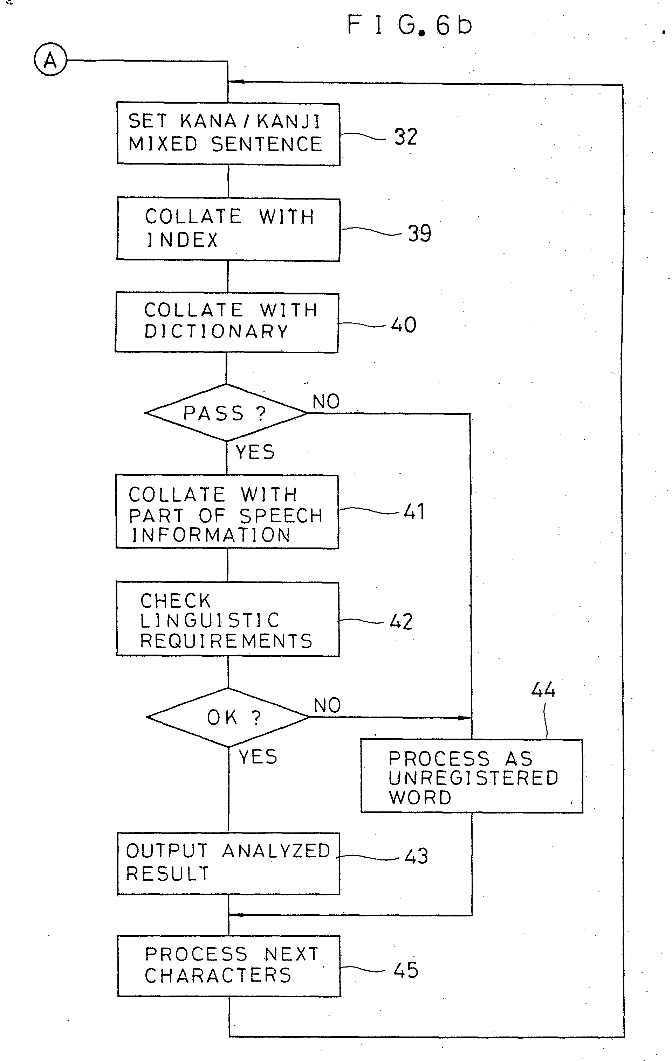

Figs. 6a and 6b are a flow chart showing an outline of language processing by the use of the dictionary having the dictionary structure of the present invention.

First, as prerequisites for a document processing apparatus to be referred to in the following description, it is assumed that the apparatus has means effecting for kana/kanji conversion and means for analysing a kanji/kana mixed character sentence. Also, the dictionary used in the description is assumed to be one shown in Fig. 5 by way of example.

To begin with, selection is made as to which one of the kana/kanji conversion and the analysis of a kanji/kana mixed sentence is to be executed (step 30).

Then, the input character string is set in the buffer memory in accordance with the selected processing mode. In this case, either kana characters (step 31) or a kanji/kana mixed sentence (step 32) is set.

The process flow for kana/kanji conversion will now be described.

First, a character string at the head of the character strings set in the buffer memory is collated with the index (step 33).

Then, the input character string is collated with the kana representations 21 in the dictionary from the start location of a retrieval range for the dictionary which has been determined by the index (step 34). As a result, the collation is passed or failed. If the collation has passed, the part of speech information 24 for the same vocabulary entry is retrieved to check validity of the kana/kanji conversion (step 35).

Here, the flow is branched into two ways dependent on whether validity is confirmed or not. If the validity has been confirmed, the relevant kanji representation 22 is retrieved using the correlating information 23 that correlates between the kana representation 21 and the kana representation 22 of the vocabulary entry, based on the above-mentioned method (step 36).

Next, information of the kanji representation 22 is drawn out of the dictionary, and the converted result in the form of a kanji/kana mixed sentence is produced (also step 36).

If the requirements, of kana/kanji conversion has not been met in the dictionary or the part of speech information 24, the input character string is processed as an unregistered word (step 37).

After producing the kanji representation 22, a next character string is set (step 38) and the flow is then returned to the step 31. The cycle of the above processing steps will be repeated until all of the character strings have been processed, or the process has been ended forcibly.

There will now be described the process flow subsequent to the step 32. Following the step 32, the head character string is collated witht the index for analysis of a kana/kanji mixed sentence (step 39).

Next, based on the index retrieval, the input character string is collated with the kanji representations 22 in the dictionary (step 40).

If the collation has passed, the part of speech information 24 is retrieved using the correlating information 26 based on the above-mentioned method.

The linguistic composition requirements are checked to make analysis of the language based on the vocabulary entries and the part of speech information 24 (step 42).

If the linguistic compositon requirements have been met, the analyzed result is output (step 43). Alternatively, if collation with the dictionary has failed, or if the linguistic composition requirements have not been met, the input character string is processed as an unregistered word in step 44 as with the process flow for kana/kanji conversion. Then, after setting a next character string (step 45), the flow is returned to the step 32.

Note that in the foregoing embodiment the processed language has been assumed to be Japanese by way of example, it is not limited to especially the Japanese language, and the dictionary structure of this application is also applicable to other language, such as Korean, in which the first group of representations are given by phonetic symbols and the second group of representations are given by ideographic characters. Although English, French, German, Spanish, etc. are languages which are expressed by phonetic symbols alone, the dictionary structure of this application can further be applied to automatic translating apparatus for translating one of those languages to the other, for example.

In such case, the dictionary structure capable of mutually translating one language to the other or vice versa can be obtained by setting one language as first group of representations, setting the other language as second group of representations, and adding key data adapted to correlate lexical entries given by the first group of representations and lexical entries given by the second group of representations in one to one corresponding relation.

As described above, according to the dictionary structure of the document processing apparatus of this invention, since a dictionary used for retrieval based on the first group of representations. Such as a dictionary for kana/kanji conversion in Japanese, for example, and a dictionary used for retrieval based on the second group of representations, such as a dictionary for analysis of a kanji/kana mixed sentence in Japanese, for example, are correlated to each other in one to one corresponding relation via key data, the storage capacity necessary for the dictionary can be reduced to a large extent as compared with the conventional method of storing a dictionary and others.

Another advantageous affect is in that, despite the reduced storage capacity necessary for a dictionary and others, any loss of information will not occur and information can be retrieved at a high speed.

Still another advantageous effect is in that since the lexical entries are stored, the compression rate of a dictionary and others can be increased.

## Claims

1. A dictionary structure for a document processing apparatus comprising means for inputting and editing a language, means for storing the input language, means for storing a dictionary to be used to analyze the language, means for storing the grammar of the language and analyzing the input language based on the stored grammar while referring to said dictionary, means for extracting a portion to be corrected out of the input language, means for displaying the language, and means for modifying a portion of the language which is to be corrected, if exists;

said dictionary for analyzing the language providing:

i) lexical entries obtained by sorting a first group of representations of the language in a predetermined order,

ii) lexical entries obtained by sorting a second group of representations of the language in a predetermined order, and

iii) key data for correlating said lexical entries of the first group of representing with said lexical entries of the second group of representations to each other in a one to one corresponding relation.

2. A dictionary structure according to Claim 1, wherein said key data comprises the ID numbers.

3. A dictionary structure according to claim 1, wherein said key data comprises addresses in which said lexical entries of the first group of representations and/or said lexical entries of the second group of representations are loaded.

4. A dictionary structure according to claim 1, wherein said key data comprises data with which said lexical entries of the second group of representations can directly be retrieved from said lexical entries of the first group of representations.

5. A dictionary structure according to claim 1, wherein said key data comprises data with which said lexical entries of the first group of representations can directly be retrieved from said lexical entries of the second group of representations.

6. A dictionary structure according to claim 1, wherein said key data comprises data with which said lexical entries of the second group of representations can directly be retrieved from said lexical entries of the first group of representations, and data with which said lexical entries of the first group of representations can directly be retrieved from said lexical entries of the second group of representations.

7. A dictionary structure according to claim 1, wherein said language is Japanese.

8. A dictionary structure according to claim 1 or 7, wherein said first group of representations comprise kana (Japanese alphabet).

9. A dictionary structure according to claim 1 or 7, wherein said second group of representations comprise kanji (Chinese characters used in Japanese writing).

10. A dictionary structure according to claim 8, wherein said lexical entries obtained by sorting the first group of representations in a predetermined order comprises kana sorted in the order of reading in kana.

11. A dictionary structure according to claim 9, wherein said lexical entries obtained by sorting the second group of representations in a predetermined order comprises kanji sorted in the order of kanji code defined by JIS C6226.

# FIG. 1

1 — INPUT/EDIT MEANS

2 — INPUT CHARACTER STORAGE MEANS

6 — DISPLAY MEANS

5 — CONTROL MEANS

3 — DICTIONARY STORAGE MEANS

7 — CORRECTOR MEANS

4 — GRAMMAR STORAGE MEANS

# FIG. 2

## FIG.3

| 20 | 21 | 22 | 23 | 24 |
|---|---|---|---|---|
| 00001 | あ | あ | 00001 | VERB・FIVE CONJUGATIONS・ラ(r)series |
| 00002 | あ | 愛 | 00005 | VERB・FIVE CONJUGATIONS・ラ(r)series |
| 00003 | あ | 空 | 00006 | VERB・FIVE CONJUGATIONS・ラ(r)series |
| 00004 | あ | 行 | 00003 | VERB・FIVE CONJUGATIONS・カ(k)series |
| 00005 | あい | 在 | 00002 | NOUN |
| 00006 | い | 有 | 00004 | VERB・FIVE CONJUGATIONS・カ(k)series |

## FIG.4

| 20 | 21 | 22 | 25 | 24 |
|---|---|---|---|---|
| 00001 | あ | あ | 00001 | VERB・FIVE CONJUGATIONS・ラ(r)series |
| 00002 | あ | 愛 | 00005 | VERB・FIVE CONJUGATIONS・ラ(r)series |
| 00003 | あ | 空 | 00004 | VERB・FIVE CONJUGATIONS・ラ(r)series |
| 00004 | あ | 行 | 00006 | VERB・FIVE CONJUGATIONS・カ(k)series |
| 00005 | あい | 在 | 00002 | NOUN |
| 00006 | い | 有 | 00003 | VERB・FIVE CONJUGATIONS・カ(k)series |

EP 0 314 503 A2

## F I G.5

| 20 | 21 | 22 | 23 | 26 | 24 |
|---|---|---|---|---|---|
| 00001 | あ | あ | 00001 | 00001 | VERB・FIVE CONJUGATIONS・ラ(r)series |
| 00002 | あ | 愛 | 00005 | 00005 | VERB・FIVE CONJUGATIONS・ラ(r)series |
| 00003 | あ | 空 | 00006 | 00004 | VERB・FIVE CONJUGATIONS・ラ(r)series |
| 00004 | あ | 行 | 00003 | 00006 | VERB・FIVE CONJUGATIONS・カ(k)series |
| 00005 | あい | 在 | 00002 | 00002 | NOUN |
| 00006 | い | 有 | 00004 | 00003 | VERB・FIVE CONJUGATIONS・カ(k)series |

EP 0 314 503 A2

# F I G. 6 a

# F I G. 6 b

(A)

```
SET KANA / KANJI
MIXED SENTENCE      ——— 32

COLLATE WITH
INDEX               ——— 39

COLLATE WITH
DICTIONARY          ——— 40

        PASS ?   —— NO ———┐
         │ YES             │
                           │
COLLATE WITH               │
PART OF SPEECH   ——— 41     │
INFORMATION                │
                           │
CHECK                      │
LINGUISTIC       ——— 42     │
REQUIREMENTS               │
                           │
        OK ?   —— NO ——————┤
         │ YES             │     ——— 44
                           │  PROCESS AS
                           │  UNREGISTERED
                           │  WORD
OUTPUT ANALYZED  ——— 43     │
RESULT                     │

PROCESS NEXT
CHARACTERS       ——— 45
```

## F I G. 7 (PRIOR ART)

| 8 | 9 | 10 | 11 |
|---|---|---|---|
| 00001 | あ | あ | VERB・FIVE CONJUGATIONS・ラ(r)series |
| 00002 | あ | 在 | VERB・FIVE CONJUGATIONS・ラ(r)series |
| 00003 | あ | 有 | VERB・FIVE CONJUGATIONS・ラ(r)series |
| 00004 | あ | 空 | VERB・FIVE CONJUGATIONS・カ(k)series |
| 00005 | あい | 愛 | NOUN |
| 00006 | い | 行 | VERB・FIVE CONJUGATIONS・カ(k)series |

## F I G. 8 (PRIOR ART)

| 14 | 15 | 16 | 17 |
|---|---|---|---|
| 00001 | あ | あ | VERB・FIVE CONJUGATIONS・ラ(r)series |
| 00002 | 愛 | あい | NOUN |
| 00003 | 空 | あ | VERB・FIVE CONJUGATIONS・カ(k)series |
| 00004 | 行 | い | VERB・FIVE CONJUGATIONS・カ(k)series |
| 00005 | 在 | あ | VERB・FIVE CONJUGATIONS・ラ(r)series |
| 00006 | 有 | あ | VERB・FIVE CONJUGATIONS・ラ(r)series |

EP 0 314 503 A2

# F I G.9 (PRIOR ART)

| | 12 | | 13 |
|---|---|---|---|
| あ | | 00001 | |
| い | | 00006 | |

# F I G.10 (PRIOR ART)

| | 18 | | 19 |
|---|---|---|---|
| あ | | 00001 | |
| 愛 | | 00002 | |
| 空 | | 00003 | |
| 行 | | 00004 | |
| 在 | | 00005 | |
| 有 | | 00006 | |